# EUROPÄISCHE PATENTSCHRIFT

(11) **EP 0 848 780 B1**
(45) Veröffentlichungstag und Bekanntmachung des Hinweises auf die Patenterteilung: **07.04.2004**
(21) Anmeldenummer: 96923974.8
(22) Anmeldetag: 05.07.1996
(51) Int. Cl.: E05F 15/00

(54) **VORRICHTUNG ZUR EINKLEMMERKENNUNG**
JAMMING-DETECTION DEVICE
DISPOSITIF POUR DETECTER UN COINCEMENT

(43) Veröffentlichungstag der Anmeldung: 24.06.1998
(73) Patentinhaber: IEE INTERNATIONAL ELECTRONICS & ENGINEERING S.A., 6468 Echternach (LU); DaimlerChrysler AG, 70567 Stuttgart (DE)
(72) Erfinder: GRIESBACH, Peter, D-75395 Ostelsheim (DE); GAMERDINGER, Hans, D-71263 Weil der Stadt (DE); PETRI, Volker, D-71134 Aidlingen (DE); MICKELER, Reinhold, D-71155 Altdorf (DE); WITTE, Michel, L-8077 Bertrange (LU); LORIG, Roland, D-54675 Sinstelt (DE); SCHMITT, Stefan, D-54293 Trier (DE)
(74) Vertreter: Freylinger, Ernest T.
(86) Internationale Anmeldenummer: PCT/EP1996/002965
(87) Internationale Veröffentlichungsnummer: WO 1998/001645

(56) Entgegenhaltungen:
- DE-A- 4 427 537

## Beschreibung

Die vorliegende Erfindung betrifft eine Vorrichtung zur Einklemmerkennung bei einem kraftbetätigten Schließelement. Derartige Vorrichtungen werden eingesetzt, um im Falle einer Einklemmung, zum Beispiel eines Körperteiles zwischen zwei sich gegenüberliegenden Schließkanten, die Antriebseinheit des Schließelementes abzuschalten und gegebenenfalls die Bewegung des Schließelementes umzukehren. Zum Einsatz kommen diese Einklemmsicherungen zum Beispiel bei elektrisch betätigten Fensterhebern und Schiebedächern, bei automatischen Fahrzeugtüren, z.B. in Bussen und Bahnen, aber auch in Fahrstuhltüren o.ä.

Die bekannten Vorrichtungen zur Einklemmerkennung basieren im wesentlichen auf zwei unterschiedlichen Funktionsweisen.

Bei einer ersten Art von Einklemmsicherungen wird die Information über eine mögliche Einklemmung aus den Leistungsdaten der Antriebseinheit für das Schließelement entnommen. Dies geschieht bei elektrischen Antrieben zum Beispiel durch die Überwachung des Motorstromes oder des vom Motor abgegebenen Drehmomentes, die beide im Fall einer Einklemmung ansteigen. Bei Überschreiten eines bestimmten Schwellenwertes des jeweiligen Parameters wird der Antriebsmotor abgeschaltet und gegebenenfalls die Bewegungsrichtung umzukehren. Probleme entstehen bei diesen Systemen insbesondere durch Reibungsverluste des Schließelementes an Führungsvorrichtungen und Dichtelementen für das Schließelement. Diese Reibungsverluste sind stark abhängig von äußeren Faktoren wie z.B. Außentemperatur oder Schmierungszustand, was dazu führt, daß die überwachten Antriebskennwerte stark variieren und es häufig zu Fehlauslösungen kommt.

Bei einer zweiten Art von Einklemmsicherungen werden druckbetätigte Schaltelemente verwendet, die an einer Schließkante angeordnet sind und die bei Druckbeaufschlagung die Antriebseinheit des Schließelementes abschalten bzw. umkehren. Die LU-A-87 942 beschreibt zum Beispiel eine Einklemmsicherung, bei der ein Foliendrucksensor an der Schließkante des Schließelementes angebracht wird. Befindet sich ein Hindernis in der Bewegungsbahn des Schließelementes wird der Foliendrucksensor beim Auftreffen des Hindernisses durch eine direkte Druckbeaufschlagung ausgelöst und die Antriebssteuerung des Schließelementes kehrt die Bewegungsrichtung des Schließelementes um. Eine derartige Anordnung zeichnet sich durch eine sehr hohe Ansprechwahrscheinlichkeit aus, jedoch entstehen Probleme bei dieser Anordnung durch die direkte Übertragung der Einklemmkraft auf den aktiven Bereich des eigentlichen Schaltelementes. In der Tat können insbesondere bewegte Hindernisse harte Schläge auf das Schaltelement ausüben und dieses zerstören.

Die DE-PS-33 47 945 beschreibt eine Profilleiste an der Schließkante eines beweglichen Schließelementes, bei der eine Schließkraft über mehrere, zum Teil V-förmig angeordnete Stege auf eine Schaltrippe übertragen wird. Die Schaltrippe wird hierdurch in Richtung der Schließkraft auf das Schaltelement gepreßt und löst dieses durch direkte Druckbeaufschlagung aus. Obwohl die Schließkraft bei dieser Profilleiste über Stege und eine Schaltrippe auf das Schaltelement übertragen wird, wodurch die eigentliche, auf das Schaltelement ausgeübte Schaltkraft leicht reduziert wird, verursachen Schläge trotzdem eine wesentliche Verschiebung der Schaltrippe in Richtung des Schaltelementes. Hierdurch ergeben sich jedoch wiederum unzulässig hohe, direkte Belastungen des aktiven Bereiches des Schaltelementes, die zu dessen Zerstörung führen.

Die DE-A-44 27 537 beschreibt ein Hohlkammerprofil zur Aufnahme eines Schaltelements. Das Hohlprofil weist einen Zentralbereich und an den Zentralbereich angrenzende Seitenbereiche auf, wobei die Seitenbereiche aus einem weicheren Material hergestellt sind als der Zentralbereich. An die Seitenbereiche greifen Kraftübertrager aus einem härteren Material an, mittels derer eine Einklemmkraft auf die Seitenebereiche übertragen werden kann.

Aufgabe der vorliegenden Erfindung ist es folglich, eine Vorrichtung zur Einklemmerkennung vorzuschlagen, bei der eine direkte Beaufschlagung des Schaltelementes mit einer Einklemmkraft verhindert wird.

Diese Aufgabe wird erfindungsgemäß durch die Merkmale der unabhängigen Ansprüche 1 und 9 gelöst, die auf eine Vorrichtung zur Einklemmerkennung bei einem kraftbetätigten Schließelement, mit einem Schaltelement, das entlang einer ersten Schließkante innerhalb eines elastischen Hohlprofiles angeordnet ist, gerichtet sind. Das Hohlprofil umfaßt einen sich längs erstreckenden Zentralbereich, in dem ein aktiver Bereich des Schaltelementes angeordnet ist, und mindestens einen sich längs erstreckenden Seitenbereich, in dem ein nicht aktiver Randbereich des Schaltelementes angeordnet ist, wobei der Seitenbereich auf der der ersten Schließkante zugewandten Seite des Hohlprofils eine höhere Verformbarkeit aufweist als der Zentralbereich. Die Vorrichtung weist weiterhin einen sich längs erstreckenden Kraftübertrager auf, der eine Einklemmkraft im wesentlichen senkrecht auf den Seitenbereich des Hohlprofiles überträgt. In einer ersten Ausgestaltung der Erfindung umfasst die Vorrichtung weiterhin einen Abstandhalter, der sich in einem Bereich des Hohlprofiles auf der der ersten Schließkante abgewandten Seite des Schaltelementes über dessen aktiven Bereich erstreckt. Hierbei ist anzumerken, daß die erste Schließkante sowohl zu einem beweglichen Schließelement gehören kann, als auch zu einem feststehenden Element, das bei geschlossenem Schließelement mit diesem zum Verschließen einer Öffnung zusammenwirkt.

Die erfindungsgemäße Vorrichtung zeichnet sich folglich dadurch aus, daß die Einklemmkraft nicht direkt auf den aktiven Bereich des Schaltelementes übertragen wird, sondern auf den Seitenbereich des Hohlprofiles. Dadurch wird der Seitenbereich des Hohlprofiles im Bereich des Ansatzpunktes des Kraftübertragers in Richtung der Einklemmkraft verformt, wobei der Zentralbereich seine Form aufgrund der relativ kleineren Verformbarkeit weitgehend beibehält. Das Schaltelement erfährt hierdurch in seinem Randbereich eine Auslenkung in Richtung der Einklemmkraft, so daß der formstabile Zentralbereich des Hohlprofiles eine Schaltkraft auf den aktiven Bereich des Schaltelementes ausübt, die der Richtung der Einklemmkraft entgegengesetzt wirkt. Wird das Schließelement aus der Einklemmposition zurückgefahren, was durch die Umkehrung der Antriebsvorrichtung erfolgt, läßt die Einklemmkraft nach, und das Hohlprofil nimmt aufgrund seiner Elastizität seine ursprüngliche Form wieder ein. Dadurch läßt der Druck, den der Zentralbereich des Hohlprofiles auf den aktiven Bereich des Schaltelementes ausübt nach, und das Schaltelement öffnet.

Der wesentliche Vorteil der indirekten Auslösung des Schaltelementes liegt darin, daß die maximale Auslenkung des Randbereiches des Schaltelementes und damit auch die von dem Zentralbereich des Hohlprofiles auf den aktiven Bereich des Schaltelementes ausgeübte Schaltkraft leicht begrenzt werden können, ohne daß das Ansprechverhalten der Vorrichtung beeinträchtigt wird. Dies geschieht dadurch, daß man die maximale Verformung des Seitenbereiches des Hohlprofiles durch eine geeignete Ausgestaltung des Seitenbereiches limitiert.

Die relativ zu dem Zentralbereich höhere Verformbarkeit des Seitenbereiches kann zum Beispiel dadurch erreicht werden, daß der Seitenbereich aus einem weicheren Material gefertigt wird als der Zentralbereich. Durch eine geeignete Materialwahl und eine entsprechende Dimensionierung der Dicke des Seitenbereiches wird dann erreicht, daß der Seitenbereich sich zunächst sehr leicht verformen läßt, was eine hohe Ansprechwahrscheinlichkeit gewährleistet, mit zunehmender Verformung jedoch eine größere Gegenkraft ausübt und dadurch eine weitere Verformung begrenzt.

In einer alternativen Ausgestaltung des Hohlprofiles sind der Zentralbereich und der Seitenbereich aus dem gleichen Material gefertigt. In diesem Fall weist der Seitenbereich in seiner, der Schließkante zugewandten Wandung eine längs verlaufende Hohlkammer auf, welche die Verformung des Seitenbereiches aufnimmt. Nachdem diese Hohlkammer durch eine Einklemmkraft vollständig zusammengedrückt wurde, kann ein derartig ausgestalteter Seitenbereich keine weitere Verformung aufnehmen.

Um eine besonders präzise Übertragung der Schaltkraft auf den aktiven Bereich des Schaltelementes zu ermöglichen, weist der Zentralbereich bevorzugt an der der ersten Schließkante zugewandten Seite des Hohlprofiles eine sich längs erstreckende Erhebung auf, die in den Hohlraum des Hohlprofiles hineinragt. Die von dem Zentralbereich ausgeübte Schaltkraft wird dann lokal durch diese Erhebung an das Schaltelement übertragen, so daß ein Auslösen des Schaltelementes bereits bei sehr geringer Auslenkung seines Randbereiches zuverlässig erfolgt. Diese Maßnahme verbessert folglich das Ansprechverhalten der Vorrichtung entscheidend.

Auf seiner der ersten Schließkante abgewandten Seite ist der Hohlraum in dem Zentralbereich bevorzugt konkav nach außen gewölbt. Bei einer Verformung des Seitenbereiches durch eine Einklemmkraft kann die der ersten Schließkante abgewandte Wandung des Hohlraumes im Seitenbereich eine Verschiebung in Richtung des Schaltelementes erleiden. Durch die gewölbte Ausgestaltung des Hohlraumes an dieser Wandung kann dabei eine unerwünschte direkte Auslösung des Schaltelementes verhindert werden.

Der Kraftübertrager ist vorteilhaft auf der der ersten Schließkante abgewandten Seite des Hohlprofiles einstückig mit dem Seitenbereich des Hohlprofiles verbunden. Dadurch bildet der Kraftübertrager mit dem Hohlprofil eine leicht herstellbare und zusammen montierbare Einheit. Der Ankoppelpunkt des Kraftübertragers ist dabei bevorzugt derart gewählt, daß eine seitliche Auslenkung des freien Endes des Kraftübertragers den Hohlraum des Hohlprofiles nicht verengt.

In einer ersten Ausgestaltung der Erfindung umfaßt die Vorrichtung einen Abstandhalter, der sich in einem Bereich des Hohlprofiles auf der der ersten Schließkante abgewandten Seite des Schaltelementes über dessen aktiven Bereich erstreckt. Dieser Abstandhalter umfaßt z.B. einen Auffahrpuffer aus formstabilen Material, der sich im wesentlichen senkrecht zu der ersten Schließkante durch entsprechende Öffnungen in dem Hohlprofil und dem Schaltelement hindurch erstreckt, wobei ein erstes Ende des Auffahrpuffers sich an der ersten Schließkante abstützt und wobei ein zweites Ende des Auffahrpuffers sich jenseits des Schaltelementes erstreckt. Das zweite Ende des Auffahrpuffers kann dabei noch innerhalb des Hohlraumes des Hohlprofiles liegen, oder durch eine entsprechende Öffnung in der der ersten Schließkante abgewandten Wandung des Hohlprofiles aus diesem herausragen. Dieser Auffahrpuffer verhindert, daß eine zweite Schließkante, die der ersten Schließkante bei geschlossenem Schließelement gegenüberliegt, eine direkte Belastung auf das Schaltelement ausübt.

In einer bevorzugten Ausführung umfaßt der Auffahrpuffer eine im wesentlichen senkrecht zu der ersten Schließkante angeordnete Hülse und einen in die Hülse einführbaren Niet, wobei der Innendurchmesser der Hülse im wesentlichen dem Au ßendurchmesser des Nietschaftes entspricht und wobei die Länge des Nietschaftes kleiner ist als die Tiefe der Hülsenbohrung. Durch diese zweiteilige Ausgestaltung läßt sich der Auffahrpuffer besonders leicht montieren. Darüber hinaus ist nach der Montage des Auffahrpuffers ein Bereich der Hülsenbohrung nicht durch den Schaft des Nietes ausgefüllt. Ist die Hülse dünnwandig ausgelegt, so verleiht dieser nicht ausgefüllte Bereich der Hülse dem Auffahrpuffer eine gewisse Flexibilität, so daß das Schließelement beim Auftreffen der zweiten Schließkante auf den Auffahrpuffer weich abgebremst wird. Dies wirkt sich zum einen natürlich schonend auf die gesamte Antriebsvorrichtung des Schließelementes aus, zum anderen wird die Geräuschbildung beim Auftreffen der zweiten Schließkante deutlich vermindert.

Um eine direkte Beanspruchung des Schaltelementes durch die zweite Schließkante zu verhindern umfaßt die Vorrichtung in einer alternativen Ausgestaltung einen Abstandhalter in Form einer Klammer aus formstabilen Material, die das Hohlprofil von der der ersten Schließkante abgewandten Seite umgreift und die sich an der ersten Schließkante abstützt. Die Klammer ist bevorzugt derart geformt, das sich ihre Form der äußeren Form des Hohlprofiles mit einem gewissen Abstand anpaßt, so daß die Klammer in montiertem Zustand keinen Druck auf die der ersten Schließkante abgewandte Wandung des Hohlprofiles ausübt. Um lediglich das Hohlprofil und nicht den Kraftübertrager zu umgreifen, ist die Klammer seitlich durch entsprechende Öffnungen in dem Kraftübertrager geführt, wobei die Öffnungen derart gestaltet sind, daß eine Übertragung einer Einklemmkraft nicht beeinträchtigt wird. Der wesentliche Vorteil der Klammer gegenüber dem Auffahrpuffer liegt darin, daß das Hohlprofil beim Anbringen der Kammer nicht durchbohrt werden muß und der Hohlraum folglich dicht bleibt. Dadurch ist das in dem Hohlprofil angeordnete Schaltelement optimal gegen Staub und andere Verunreinigungen geschützt. Im Hinblick auf eine Reduzierung der Geräuschbildung ist die Klammer bevorzugt aus einem elastischen Material gefertigt, wie z.B. Metall oder Kunststoff.

Eine zweite Ausgestaltung der Erfindung umfasst einen zweiten sich längs erstreckenden Kraftübertrager, der auf der der ersten Schließkante abgewandten Seite des Hohlprofiles an einen zweiten Seitenbereich angekoppelt ist und der eine Einklemmkraft im wesentlichen senkrecht auf den zweiten Seitenbereich des Hohlprofiles überträgt, und durch eine Membran aus flexiblem Material, die sich in einem gewissen Abstand von dem Hohlprofil zwischen dem ersten und dem zweiten Kraftübertrager erstreckt. Die zweite Schließkante wird beim Verschließen des Schließelementes zwischen die beiden Kraftübertrager eingeführt und taucht in die Membran ein. Dabei wird einerseits das Schließelement abgebremst ohne daß eine direkte Belastung auf das Schaltelement ausgeübt wird, andererseits erfahren die beiden Kraftübertrager eine seitliche Kraft in Richtung der zweiten Schließkante. Dies ist besonders vorteilhaft, wenn die Kraftübertrager Dichtlippen aufweisen, die gleichzeitig eine Dichtfunktion gegen das zweite Schließelement ausüben sollen. Durch die seitlich in Richtung des zweiten Schließelementes wirkende Kraft wird die Dichtlippe jedes Kraftübertragers fest gegen das zweite Schließelement gepreßt, so daß sich die Dichtwirkung entscheidend verbessert.

Es ist zu bemerken, daß der Einsatz von Abstandhaltern zum Vermeiden einer direkten Beanspruchung des Schaltelementes durch das Schließelement erst durch die Anordnung des Schaltelementes und des Kraftübertragers ermöglicht wird. In der Tat kann ein solcher Abstandhalter nur dann sinnvoll eingesetzt werden, wenn der Kraftübertrager als Auslöseelement der Vorrichtung nicht unmittelbar in dem Verfahrweg des Schließelementes angeordnet ist.

Das Schaltelement umfaßt bevorzugt einen unter dem Namen "Force Sensing Resistor" bekannten Foliendrucksensor. Derartige Sensoren bestehen aus zwei Kunststoffolien, die miteinander verklebt sind, wobei zwischen den Folien Abstandhalter eingeklebt sind. Auf einer der beiden Folien sind Elektrodenbahnen aufgebracht, die in dem aktiven Bereich des Sensors kammartig ineinander eingreifen. Die zweite Folie ist mit einem Halbleiterpolymer beschichtet, der bei einem Druck auf den Sensor, zwischen den beiden kammartig ineinandergreifenden Elektroden einen elektrischen Kontakt herstellt. Je höher die Druckbeaufschlagung ist, desto stärker werden die leitenden Partikel im Polymer zusammengedrückt, und desto kleiner wird der Widerstand dieses elektrischen Kontaktes.

Im folgenden wird nun eine bevorzugte Ausgestaltung der Erfindung anhand der beiliegenden Figuren beschrieben. Es handelt sich hierbei um eine Vorrichtung zur Einklemmerkennung bei einem elektrisch betätigten Seitenfenster eines Kraftfahrzeuges. Es zeigen:
- Fig.1:: einen Querschnitt durch eine Einklemmsicherung mit Abstandhalter;
- Fig.2:: eine schematische Darstellung eines Einklemmfalles;
- Fig.3:: einen Querschnitt durch eine Einklemmsicherung mit Auffahrpuffer;
- Fig.4:: einen Querschnitt durch eine Einklemmsicherung mit eingezogener Membran.

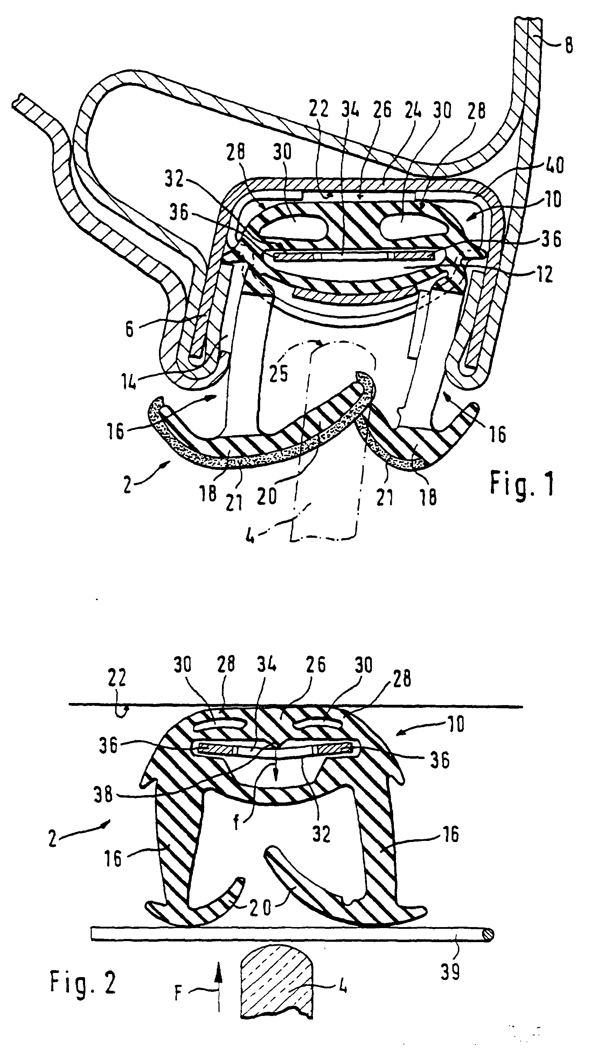

Die in Fig. 1 dargestellte Vorrichtung zur Einklemmerkennung ist als Dichtungsprofil 2 für eine Seitenscheibe 4 eines Kraftfahrzeuges ausgebildet und in einem profilierten Scheibenrahmen 6 in einer Fahrzeugtür 8 angeordnet. Das Dichtungsprofil 2 umfaßt im wesentlichen ein Hohlprofil 10 aus elastischem Material mit einem Hohlraum 12, das geschützt in einer Einbuchtung 14 des Rahmens 6 angeordnet ist, und zwei sich auf beiden Seiten der Seitenscheibe 4 erstreckende Schenkel 16, welche die Scheibe 4 beim Schließen führen und abdichten. Die freien Enden 18 der beiden Schenkel 16 weisen dazu auf der der Scheibe 4 zugewandten Seite jeweils eine flexible Dichtlippe 20 auf, die sich bei geöffneter Scheibe 4 berühren und so ein Eindringen von Verunreinigungen in das innere des Dichtungsprofiles 2 verhindern. Beim Schließen der Seitenscheibe 4 werden die beiden Dichtlippen 20 durch die Scheibe 4 auseinandergedrückt, wodurch sie sich aufgrund ihrer Elastizität dichtend an die Scheibe 4 anlegen. Um eine Geräuschentwicklung beim Entlanggleiten der Seitenscheibe 4 zu vermeiden, sind die Dichtlippen 20 dabei an ihrer der Scheibe 4 zugewandten Seite mit einer Beflockung 21 versehen.

Das Hohlprofil 10 ist entlang einer ersten Schließkante 22 angeordnet, die von dem Grund 24 der Einbuchtung 14 ausgebildet wird und die bei geschlossener Scheibe 4 einer zweiten Schließkante 25 an der Seitenscheibe 4 gegenüberliegt. Es umfaßt einen sich längs (d.h. senkrecht zur Zeichenebene) erstrekkenden Zentralbereich 26 und jeweils seitlich einen sich längs erstreckenden Seitenbereich 28. Die beiden Seitenbereiche 28 des Hohlprofiles sind dabei derart ausgelegt, daß sie eine deutlich höhere Verformbarkeit ausweisen als der Zentralbereich 26. Dies wurde in dem dargestellten Fall dadurch erreicht, daß in den Seitenbereichen 28 jeweils eine Hohlkammern 30 ausgeführt ist, die sich entlang des gesamten Hohlprofiles 10 erstreckt. Bei einer Krafteinwirkung senkrecht zur Schließkante 22, werden diese Hohlkammern 30 zusammengedrückt, so daß sich der jeweilige Seitenbereich 28 verhältnismäßig leicht verformt. Es ist anzumerken, daß eine höhere Verformbarkeit der Seitenbereiche 28 bezüglich des Zentralbereiches 26 auch dadurch erreicht werden kann, daß die Seitenbereiche 28 aus einem weicheren Material hergestellt werden als der Zentralbereich 26.

Der Hohlraum 12 der Hohlprofiles 10 erstreckt sich auf der der Schließkante 22 abgewandten Seite der Hohlkammern 30 in Querrichtung über den gesamten Zentralbereich 26 und seitlich in die jeweiligen Seitenbereiche 28 hinein, während er in Längsrichtung entlang des gesamten Hohlprofiles verläuft. Die der Schließkante 22 zugewandte Wandung des Hohlraumes 12 ist im wesentlichen eben ausgebildet, während die gegenüberliegende Wandung sich zur Scheibe 4 hin wölbt. Die Breite des Hohlraumes 12 und seine Höhe an den seitlichen Rändern sind derart bemessen, daß ein Schaltelement 32, z.B. ein Foliendrucksensor in dem Hohlraum 12 mit geringem seitlichen und vertikalen Spiel gehalten wird.

Der Foliendrucksensor 32 soll bei einer Einklemmung ausgelöst werden um eine Antriebsvorrichtung der Seitenscheibe 4 abzuschalten. Dazu umfaßt der Foliendrucksensor 32 einen aktiven Bereich 34, der mittig entlang dem Hohlraum 12 verläuft, sowie seitlich jeweils einen nicht aktiven Randbereich 36. Der Foliendrucksensor 32 ist dabei mit seinen nicht aktiven Randbereichen 36 seitlich in dem Hohlraum 12 gehalten, so daß er gegen Verrutschen und Verdrehen gesichert ist.

In Fig. 2 ist schematisch ein Einklemmfall dargestellt. Da sich zwischen der Seitenscheibe 4 und dem Dichtungsprofil 2 ein Hindernis 39 befindet, kann die Seitenscheibe 4 nicht zwischen die beiden Schenkel 16 eingeführt werden. Die Schließkraft, die durch den Pfeil F dargestellt ist, wird folglich als Einklemmkraft auf die mit dem jeweiligen Seitenbereich 28 des Hohlprofiles 10 verbundenen Schenkel 16 übertragen, die die Einklemmkraft F an den jeweiligen Seitenbereich 28 weiterleiten. Jeder Schenkel 16 wirkt somit als Kraftübertrager zwischen einem Hindernis 39 und dem jeweiligen Seitenbereich 28 des Hohlprofiles 10. Dadurch wird der Seitenbereich 28 des Hohlprofiles 10 im Bereich des Ansatzpunktes des Schenkels 16 in Richtung der Einklemmkraft F verformt, wobei der Zentralbereich 26 seine Form aufgrund der relativ kleineren Verformbarkeit weitgehend beibehält. Der Foliendrucksensor 32 erfährt hierdurch in seinem Randbereich 36 eine Auslenkung in Richtung der Einklemmkraft F, so daß der formstabile Zentralbereich 26 des Hohlprofiles 10 eine Schaltkraft (durch den Pfeil f dargestellt) auf den aktiven Bereich 34 des Foliendrucksensors 32 ausübt, die der Richtung der Einklemmkraft F entgegengesetzt wirkt. Wird die Seitenscheibe 4 aus der Einklemmposition zurückgefahren, was durch die Umkehrung der Antriebsvorrichtung erfolgt, läßt die Einklemmkraft F nach, und das Hohlprofil 10 nimmt aufgrund seiner Elastizität seine ursprüngliche Form wieder ein. Dadurch läßt der Druck, den der Zentralbereich 26 des Hohlprofiles 10 auf den aktiven Bereich 34 des Foliendrucksensors 32 ausübt nach, und der Foliendrucksensor 32 öffnet.

Um eine präzise Übertragung der Schaltkraft f auf den aktiven Bereich 34 des Foliendrucksensors 32 zu ermöglichen, weist die der Schließkante 22 zugewandte Wandung des Hohlraumes 12 bevorzugt mittig eine sich längs erstrekkende als Schaltnase ausgebildete Erhebung 38 auf, die in den Hohlraum 12 des Hohlprofiles 10 hineinragt. Durch diese Schaltnase 38 wird die von dem Zentralbereich ausgeübte Schaltkraft lokal an den Foliendrucksensor 32 übertragen, so daß ein Auslösen des Foliendrucksensor 32 bereits bei sehr geringer Auslenkung seines Randbereiches 36 zuverlässig erfolgt.

Fig. 1 stellt der Abstandhalter 40 dar, der eine direkte Beanspruchung des aktiven Bereiches 34 des Foliendrucksensors 32 verhindert. Dieser Abstandhalter 40 in Form einer Klammer aus formstabilen Material, umgreift das Hohlprofil 10 von der der ersten Schließkante 22 abgewandten Seite her um sich an der ersten Schließkante 22 abzustützen. Die Klammer 40 ist in ihrem zur Scheibe 4 gerichteten Bereich bevorzugt derart geformt, das sich ihre Form der äußeren Form des Hohlprofiles 10 mit einem gewissen Abstand anpaßt, während sie in dem der Schließkante 22 zugewandten Bereich vorteilhaft die Form der Einbuchtung 14 aufweist. Damit die Klammer 40 lediglich das Hohlprofil 10 umgreift und nicht die Schenkel 16, ist sie seitlich durch entsprechende Öffnungen in den Schenkel 16 durchgeführt. Die seitlichen Öffnungen in den Schenkeln 16 müssen dabei derart gestaltet sein, daß eine Übertragung einer Einklemmkraft nicht beeinträchtigt wird.

Die Klammer 40 ist bevorzugt aus Stahlblech gefertigt, wodurch sie eine gewisse Elastizität aufweist. Beim Auffahren der Seitenscheibe 4 auf die Klammer 40 wird die Seitenscheibe 4 folglich weich abgebremst, was zum einen die Antriebsvorrichtung der Scheibe 4 schont und zum anderen einer starken Geräuschentwicklung entgegenwirkt.

Es ist anzumerken, daß sich die Klammer 40 nicht über die gesamte Länge des Hohlprofiles 10 erstreckt, sondern nur lokal auf einer kurzen Strecke. In der Tat reicht im allgemeinen bereits ein kurzer Abstandshalter 40 auf der gesamten Länge des Hohlprofiles 10 aus, um eine direkte Belastung des Foliendrucksensor 32 durch die Scheibe 4 wirksam zu verhindern.

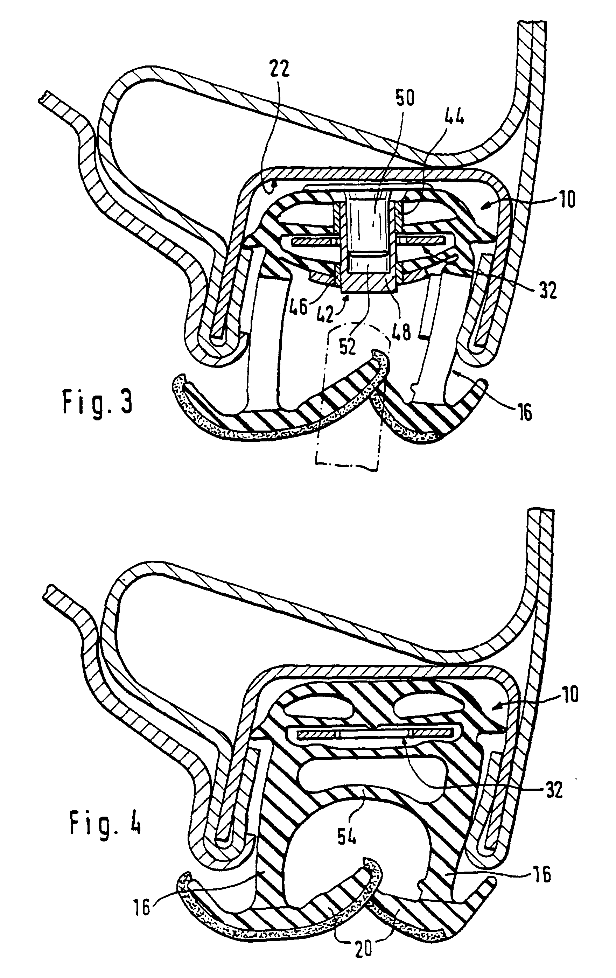

In Fig. 3 ist eine Einklemmsicherung mit einem Auffahrpuffer 42 dargestellt. Das Hohlprofil 10 und die Schenkel 16 sind bei dieser Einklemmsicherung im wesentlichen gleich ausgestaltet als in Fig. 1. Lediglich in dem Bereich eines Auffahrpuffers 42, die ähnlich wie die Klammer 40 nur lokal an einigen wenigen Stellen über der Länge des Hohlprofiles 10 angeordnet sind, ergeben sich Unterschiede zu dem Profil 10 der Fig. 1. In diesem Bereich sind sowohl der Zentralbereich 26 des Hohlprofiles 10 als auch der Foliendrucksensor 32 mit einer Bohrung 44 versehen, die sich im wesentlichen senkrecht zu der ersten Schließkante 22 erstreckt. Der Durchmesser der Bohrung 44 muß dabei derart klein gewählt sein, daß die beiden kammartig ineinander eingreifenden Elektrodenbahnen des Foliendrucksensor 32 nicht vollständig durchtrennt werden, so daß der Foliendrucksensor 32 in Längsrichtung auf beiden Seiten der Bohrung 44 voll funktionsfähig bleibt.

In die Bohrung 44 in dem Hohlprofil 10 und dem Foliendrucksensor 32 ist ein Auffahrpuffer 42 aus formstabilen Material eingeführt, der sich an der ersten Schließkante 22 abstützt und sich im wesentlichen senkrecht zu dieser bis durch den Foliendrucksensor 32 erstreckt. Das freie Ende des Auffahrpuffers 42 kann dabei noch innerhalb des Hohlraumes 12 liegen, oder durch eine entsprechende Öffnung 46 in der der ersten Schließkante 22 abgewandten Wandung des Hohlprofiles 10 aus diesem herausragen.

Der Auffahrpuffer 42 umfaßt vorteilhaft eine im wesentlichen senkrecht zu der ersten Schließkante 22 angeordnete Hülse 48 und einen in die Hülse 48 einführbaren Niet 50. Dabei entspricht der Innendurchmesser der Hülse im wesentlichen dem Außendurchmesser des Nietschaftes, die Länge des Nietschaftes ist jedoch kleiner ist als die Tiefe der Hülsenbohrung. In montiertem Zustand bildet sich folglich eine Hohlkammer 52 in der Hülse aus, die dem Auffahrpuffer 42 eine gewisse Flexibilität verleiht, so daß das Schließelement beim Auftreffen der zweiten Schließkante auf den Auffahrpuffer weich abgebremst wird.

Es ist anzumerken, daß eine Einklemmung in dem Bereich des Auffahrpuffers 42 trotz der Durchbohrung des Foliendrucksensors 32 in diesem Bereich erkannt werden kann. In der Tat wird eine auf die Schenkel 16 auftreffende Einklemmkraft F durch die Schenkel 16 auf einer größeren Länge auf die Seitenbereiche 28 übertragen, so daß die resultierende Verformung der Seitenbereiche 28 den Foliendrucksensor 32 auch in Zonen auslenkt, die in Längsrichtung an die Bohrung angrenzen. Hierdurch bleibt eine zuverlässige Auslösung der Einklemmsicherung gewährleistet.

Eine weitere Variante einer Einklemmsicherung ist in Fig. 4 dargestellt. Bei dieser Ausgestaltung ist zwischen den Schenkeln 16 in einem gewissen Abstand zum Hohlprofil 10 eine zusätzliche Membran 54 aus flexiblem Material eingezogen, die vorzugsweise mit den Schenkeln 16 einstückig verbunden ist. Auch diese Membran 54 verhindert zuverlässig ein direktes Auftreffen der Seitenscheibe 4 auf das Hohlprofil 10. Beim Schließen der Scheibe 4 taucht dies in die Membran 54 ein und die Bewegung wird weich abgebremst, ohne daß eine direkte Belastung auf das Schaltelement 32 ausgeübt wird. Durch das Eintauchen der Scheibe 4 in die Membran 54 erfahren die beiden Schenkel 16 eine seitliche Kraft in Richtung auf die Seitenscheibe 4, wodurch die Dichtlippen 20 fest gegen die Scheibe 4 gepreßt werden, so daß sich ihre Dichtwirkung entscheidend verbessert. Um einen möglichst gleichmäßigen Anpreßdruck der Dichtlippen 20 gegen die Seitenscheibe 4 zu erhalten, ist die zusätzliche Membran 54 dabei bevorzugt über die ganze Länge des Hohlprofiles 10 eingezogen.

## Patentansprüche

1. Vorrichtung zur Einklemmerkennung bei einem kraftbetätigten Schließelement, mit einem Schaltelement (32), das entlang einer ersten Schließkante (22) innerhalb eines elastischen Hohlprofiles (10) angeordnet ist, wobei das Hohlprofil (10) einen sich längs erstreckenden Zentralbereich (26) und mindestens einen sich längs erstreckenden Seitenbereich (28) umfaßt , wobei der Seitenbereich (28) auf der der ersten Schließkante (22) zugewandten Seite des Hohlprofils (10) eine höhere Verformbarkeit aufweist als der Zentralbereich (26), und wobei die Vorrichtung einen sich längs erstreckenden Kraftübertrager (16) aufweist, der eine Einklemmkraft (F) von der der ersten Schließkante abgewandten Seite her auf den Seitenbereich (28) des Hohlprofiles (10) überträgt, **dadurch gekennzeichnet, dass** in dem Zentralbereich (26) ein aktiver Bereich (34) des Schaltelementes (32) angeordnet ist, dass in dem Seitenbereich (28) ein nicht aktiver Randbereich (36) des Schaltelementes (32) angeordnet ist, und dass ein Abstandhalter vorgesehen ist, der sich in einem Bereich des Hohlprofiles (10) auf der der ersten Schließkante (22) abgewandten Seite des Schaltelementes (32) über dessen aktiven Bereich (34) erstreckt.

2. Vorrichtung nach Anspruch 1, **dadurch gekennzeichnet, daß** der Zentralbereich (26) an der der ersten Schließkante (22) zugewandten Seite des Hohlprofiles (10) eine sich längs erstreckende Erhebung (38) aufweist, die in den Hohlraum (12) des Hohlprofiles (10) hineinragt.

3. Vorrichtung nach einem der Ansprüche 1 oder 2, **dadurch gekennzeichnet, daß** der Hohlraum (12) in dem Zentralbereich (26) auf der der ersten Schließkante (22) abgewandten Seite konkav nach außen gewölbt ist.

4. Vorrichtung nach einem der Ansprüche 1 bis 3, **dadurch gekennzeichnet, daß** der Kraftübertrager (16) auf der der ersten Schließkante (22) abgewandten Seite des Hohlprofiles (10) an dessen Seitenbereich (28) angekoppelt ist.

5. Vorrichtung nach einem der Ansprüche 1 bis 4,, **dadurch gekennzeichnet, daß** der Abstandhalter einen Auffahrpuffer (42) aus formstabilen Material umfaßt, der sich im wesentlichen senkrecht zu der ersten Schließkante (22) durch entsprechende Öffnungen (44) in dem Hohlprofil (10) und dem Schaltelement (32) hindurch erstreckt, wobei ein erstes Ende des Auffahrpuffers (42) sich an der ersten Schließkante (22) abstützt und wobei ein zweites Ende des Auffahrpuffers (42) sich jenseits des Schaltelementes (32) erstreckt.

6. Vorrichtung nach Anspruch 5, **dadurch gekennzeichnet, daß** der Auffahrpuffer (42) eine im wesentlichen senkrecht zu der ersten Schließkante (22) angeordnete Hülse (48) und einen in die Hülse (48) einführbaren Niet (50) umfaßt, wobei der Innendurchmesser der Hülse (48) im wesentlichen dem Außendurchmesser des Nietschaftes entspricht und wobei die Länge des Nietschaftes kleiner ist als die Tiefe der Hülsenbohrung.

7. Vorrichtung nach einem der Ansprüche 1 bis 4, **dadurch gekennzeichnet daß** der Abstandhalter eine Klammer (40) aus formstabilen Material umfaßt, die das Hohlprofil (10) von der der ersten Schließkante (22) abgewandten Seite umgreift und die sich an der ersten Schließkante (22) abstützt.

8. Vorrichtung nach Anspruch 7, **dadurch gekennzeichnet, daß** die Klammer (40) aus einem elastischen Material besteht.

9. Vorrichtung zur Einklemmerkennung bei einem kraftbetätigten Schließelement, mit einem Schaltelement (32), das entlang einer ersten Schließkante (22) innerhalb eines elastischen Hohlprofils (10) angeordnet ist, wobei das Hohlprofil (10) einen sich längs erstreckenden Zentralbereich (26) und einen ersten und einen zweiten sich jeweils längs erstreckenden Seitenbereich (28) umfaßt, wobei jeder Seitenbereich (28) auf der der ersten Schließkante (22) zugewandten Seite des Hohlprofils (10) eine höhere Verformbarkeit aufweist als der Zentralbereich (26), und wobei die Vorrichtung einen ersten und einen zweiten sich längs erstreckenden Kraftübertrager (16) aufweist, die auf der der ersten Schließkante (22) abgewandten Seite des Hohlprofiles (10) an den ersten bzw. den zweiten Seitenbereich (28) angekoppelt ist und eine Einklemmkraft (F) von der der ersten Schließkante abgewandten Seite her auf den jeweiligen Seitenbereich (28) des Hohlprofiles (10) übertragen können, **dadurch gekennzeichnet, dass** in dem Zentralbereich (26) ein aktiver Bereich (34) des Schaltelementes (32) angeordnet ist, dass in den Seitenbereichen (28) jeweils ein nicht aktiver Randbereich (36) des Schaltelementes (32) angeordnet ist, und dass die Vorrichtung eine Membran (54) aus flexiblem Material aufweist, die sich in einem gewissen Abstand von dem Hohlprofil (10) zwischen dem ersten und dem zweiten Kraftübertrager (16) erstreckt.

10. Vorrichtung nach einem der vorhergehenden Ansprüche, **dadurch gekennzeichnet, daß** das Schaltelement (32) einen Foliendrucksensor umfaßt.

## Claims

1. Device for detection of trapping in a power-operated closing element with a switching element (4), which is arranged along a first closing edge (22) within an elastic hollow section (10), wherein the hollow section (10) comprises a central area (26) extending longitudinally, and at least one side area (28) extending longitudinally, the side area (28) on the side of the hollow section (10) facing the first closing edge (22) having a higher deformability than the central area (26), and wherein the device has a force transmitter (16) extending longitudinally, which transmits a trapping force (F) from the side facing away from the first closing edge to the side area (28) of the hollow section (10), **characterized in that** in the central area (26), an active area (34) of the switching element (32) is arranged, **in that** in the side area (28), a non-active edge area (36) of the switching element (32) is arranged, and **in that** a spacer, which extends in an area of the hollow section (10) on the side of the switching element (32) facing away from the first closing edge (22) over its active area (34), is provided.

2. Device according to claim 1, **characterised in that** the central area (26) on the side of the hollow section (10) facing the first closing edge (22) has an elevation (38) extending longitudinally, which penetrates the hollow space (12) of the hollow section (10).

3. Device according to one of claims 1 or 2, **characterised in that** the hollow space (12) in the central area (26) on the side facing away from the first closing edge (22) is curved concavely outwards.

4. Device according to one of claims 1 to 3, **characterised in that** the force transmitter (16) on the side of the hollow section (10) facing away from the first closing edge (22) is connected to its side area (28).

5. Device according to one of claims 1 to 4, **characterised in that** the spacer comprises an impact buffer (42) made from dimensionally stable material, which extends essentially at right angles to the first closing edge (22) through suitable openings (44) in the hollow section (10) and the switching element (32), a first end of the impact buffer (42) resting on the first closing edge (22) and a second end of the impact buffer (42) extending beyond the switching element (32).

6. Device according to claim 5, **characterised in that** the impact buffer (42) comprises a sleeve (48) arranged essentially at right angles to the first closing edge (22) and a rivet (50), which can be introduced into the sleeve (48), the inside diameter of the sleeve (48) corresponding essentially to the outside diameter of the rivet shank and the length of the rivet shank being smaller than the depth of the sleeve hole.

7. Device according to one of claims 1 to 4, **characterised in that** the spacer comprises a clamp (40) made from dimensionally stable material which encloses the hollow section (10) from the side facing away from the first closing edge (22) and rests on the first closing edge (22).

8. Device according to claim 7, **characterised in that** the clamp (40) consists of an elastic material.

9. Device for detection of trapping in a power-operated closing element with a switching element (4), which is arranged along a first closing edge (22) within an elastic hollow section (10), wherein the hollow section (10) comprises a central area (26) extending longitudinally, and a first and a second side area (28) extending longitudinally, wherein each side area (28), on the side of the hollow section (10) facing the first closing edge (22), having a higher deformability than the central area (26), and wherein the device has a first and a second force transmitter (16) extending longitudinally, which is connected to the first resp. second side area (28) on the side of the hollow section (10) facing away from the first closing edge (22) and transmits a trapping force (F) from the side facing away from the first closing edge (22) on the respective side area (28) of the hollow section (10) **characterised in that** in the central area (26), an active area (34) of the switching element (32) is arranged, **in that** in the side area (28), a non-active edge area (36) of the switching element (32) is arranged, and **in that** the device comprises a membrane (54) made from flexible material, which extends between the first and the second force transmitter (16) a certain distance from the hollow section (10).

10. Device according to one of the preceding claims, **characterised in that** the switching element (32) comprises a film pressure sensor.

## Revendications

1. Dispositif pour détecter un coincement dans le cas d'un élément de fermeture actionné par une force, comprenant un élément de couplage (32) placé le long d'une première arête de fermeture (22) à l'intérieur d'un profilé creux élastique (10), le profilé creux (10) comprenant une partie centrale (26) qui s'étend longitudinalement et au moins une partie latérale (28) qui s'étend longitudinalement, la partie latérale (28) présentant sur le côté du profilé creux (10) tourné vers la première arête de fermeture (22) une déformabilité supérieure à celle de la partie centrale (26) et le dispositif présentant un transmetteur de force (16) qui s'étend longitudinalement et transmet une force de coincement (F) depuis le côté opposé à la première arête de fermeture sur la partie latérale (28) du profilé creux (10), **caractérisé en ce qu'**une zone active (34) de l'élément de couplage (32) est placée dans la partie centrale (26), **en ce qu'**une zone marginale non active (36) de l'élément de couplage (32) est placée dans la partie latérale (28) et **en ce qu'**un écarteur est prévu, lequel s'étend dans une partie du profilé creux (10) sur le côté de l'élément de couplage (32) opposé à la première arête de fermeture (22) sur la zone active (34) de celui-ci.

2. Dispositif selon la revendication 1, **caractérisé en ce que** la partie centrale (26) présente, sur le côté du profilé creux (10) tourné vers la première arête de fermeture (22), une bosse (38) qui s'étend longitudinalement et fait saillie dans un espace vide (12) du profilé creux (10).

3. Dispositif selon l'une des revendications 1 ou 2, **caractérisé en ce que** l'espace vide (12) est concave, bombé vers l'extérieur dans la partie centrale (26) sur le côté opposé à la première arête de fermeture (22).

4. Dispositif selon l'une des revendications 1 à 3, **caractérisé en ce que** le transmetteur de force (16) est couplé à la partie latérale (28) du profilé creux (10) sur le côté de celui-ci opposé à la première arête de fermeture (22).

5. Dispositif selon l'une des revendications 1 à 4, **caractérisé en ce que** l'écarteur comprend un tampon anti-chocs (42) en matière indéformable, lequel s'étend de manière sensiblement verticale par rapport à la première arête de fermeture (22) en passant par des ouvertures (44) appropriées aménagées dans le profilé creux (10) et l'élément de couplage (32), une première extrémité du tampon anti-chocs (42) prenant appui sur la première arête de fermeture (22) et une deuxième extrémité du tampon anti-chocs (42) s'étendant au-delà de l'élément de couplage (32).

6. Dispositif selon la revendication 5, **caractérisé en ce que** le tampon anti-chocs (42) comprend une gaine (48) sensiblement verticale par rapport à la première arête de fermeture (22) et un rivet (50) pouvant être introduit dans la gaine (48), le diamètre intérieur de la gaine (48) correspondant sensiblement au diamètre extérieur de la tige du rivet et la longueur de la tige du rivet étant inférieure à la profondeur de l'alésage de la gaine.

7. Dispositif selon l'une des revendications 1 à 4, **caractérisé en ce que** l'écarteur comprend une agrafe (40) en matière indéformable, laquelle entoure le profilé creux (10) en le prenant par le côté opposé à la première arête de fermeture (22) et prend appui sur la première arête de fermeture (22).

8. Dispositif selon la revendication 7, **caractérisé en ce que** l'agrafe (40) est composée d'une matière élastique.

9. Dispositif pour détecter un coincement dans le cas d'un élément de fermeture actionné par une force, comprenant un élément de couplage (32) placé le long d'une première arête de fermeture (22) à l'intérieur d'un profilé creux élastique (10), le profilé creux (10) comprenant une partie centrale (26) qui s'étend longitudinalement ainsi qu'une première et une deuxième parties latérales (28) qui s'étendent respectivement longitudinalement, chaque partie latérale (28) présentant sur le côté du profilé creux (10) tourné vers la première arête de fermeture (22) une déformabilité supérieure à celle de la partie centrale (26) et le dispositif présentant un premier et un deuxième transmetteurs de force (16) s'étendant longitudinalement qui sont couplés à la première resp. à la deuxième parties latérales (28) sur le côté du profilé creux (10) opposé à la première arête de fermeture (22) et peuvent transmettre une force de coincement (F) depuis le côté opposé à la première arête de fermeture sur la partie latérale (28) respective du profilé creux (10), **caractérisé en ce qu'**une zone active (34) de l'élément de couplage (32) est placée dans la partie centrale (26), **en ce qu'**une zone marginale non active (36) de l'élément de couplage (32) est placée respectivement dans les parties latérales (28) et **en ce que** le dispositif présente une membrane (54) en matière flexible, laquelle s'étend entre le premier et le deuxième transmetteurs de force (16) à une certaine distance du profilé creux (10).

10. Dispositif selon l'une des revendications précédentes, **caractérisé en ce que** l'élément de couplage (32) comprend un capteur de pression du type à feuille.
